# FASCICULE DE BREVET EUROPEEN

(11) **EP 3 487 727 B1**
(45) Date de publication et mention de la délivrance du brevet: **25.11.2020**
(21) Numéro de dépôt: 17784334.9
(22) Date de dépôt: 09.06.2017
(51) Int. Cl.: B60Q 1/04, F16B 41/00, B60Q 1/26, B60R 19/48

(54) **PARE-CHOCS AVEC DISPOSITIF LUMINEUX D'UN VÉHICULE AUTOMOBILE**
STOSSFÄNGER EINES KRAFTFAHRZEUGS MIT BELEUCHTUNGSVORRICHTUNG
MOTOR VEHICLE BUMPER COMPRISING A LIGHTING DEVICE

(30) Priorité: 22.07.2016 FR 1657013
(43) Date de publication de la demande: 29.05.2019
(73) Titulaire: PSA Automobiles SA, 78300 Poissy (FR)
(72) Inventeur: ROSSO, Serge, 90100 Saint Dizier l' Évêque (FR); CASTRO, Rosa, 90850 Essert (FR)
(86) Numéro de dépôt international: PCT/FR2017/051466
(87) Numéro de publication internationale: WO 2018/015622

(56) Documents cités:
- DE-B3-102005 028 120
- FR-A1- 2 789 956
- FR-A1- 2 909 052
- JP-A- 2006 088 735
- JP-A- 2012 240 541

## Description

L'invention se rapporte au domaine des pare-chocs de véhicule. Plus précisément, l'invention traite du montage et du démontage d'un équipement au niveau d'un pare-chocs de véhicule. L'invention traite également d'un véhicule automobile muni d'un pare-chocs coopérant avec un équipement.

Afin de monter et démonter un dispositif d'éclairage d'un véhicule automobile, le pare-chocs du véhicule dispose d'un orifice qui permet d'insérer une vis. Le dispositif d'éclairage est ensuite inséré dans la carrosserie et la vis est ensuite serrée à l'aide d'un outil adapté. Lors du démontage, la vis est desserrée et le dispositif d'éclairage est enlevé de la carrosserie. Si l'utilisateur ne prend pas de précaution particulière, vu que la vis se libère de l'élément de support, il y a un risque non-négligeable que la vis tombe et que celle-ci vienne se perdre à l'intérieur du pare-chocs, sans avoir de moyen de pouvoir la récupérer. Dans le cas d'un remplacement, cela ajoute une contrainte sur le réparateur et oblige d'avoir un moyen de fixation de réserve compatible avec le type de dispositif d'éclairage.

Par ailleurs, la portion dans laquelle la vis est serrée nécessite, lors de sa fabrication, un moulage particulier. Cette portion d'accueil doit également être adaptée à recevoir le dispositif d'éclairage, et en particulier une de ses pattes de fixation dans une configuration autorisant l'introduction de la vis. Cela engendre des coûts de fabrication, tant au niveau de prix de la portion d'accueil et du dispositif d'éclairage lui-même qu'au niveau du prix du moule. Le temps passé à insérer correctement les pattes de fixation dans leurs supports doit aussi être pris en compte.

Les documents DE102005028120 et FR2789956 décrivent des parechocs comportant des moyens de fixation à la structure du véhicule.

Le document FR 2 909 052, qui correspond au préambule de la revendication 1, divulgue un système de montage d'un phare à des éléments de structure d'un véhicule automobile. Le système comprend plusieurs fixations incluant chacune une attache rigidement solidaire d'un boîtier de phare et un ancrage rigidement solidaire d'un élément de structure du véhicule. La particularité de ce système est qu'au moins une fixation se monte par emboîtement de l'attache dans l'ancrage et qu'au moins une fixation se monte par vissage dans l'ancrage d'une vis traversant l'attache. Néanmoins, le risque de perdre la vis dans le cas d'un remplacement du phare reste présent.

L'invention a pour objectif de résoudre au moins un des problèmes posés par l'art antérieur. Plus précisément, l'invention a pour objectif de proposer un système qui empêche de perdre la vis lors du montage et/ou du remplacement d'un dispositif lumineux d'un véhicule automobile.

L'invention a pour objet un pare-chocs de véhicule ayant les caractéristiques de la revendication 1.

Selon des modes particuliers de réalisation, le pare-chocs peut comprendre une ou plusieurs des caractéristiques suivantes, prises isolément ou selon toutes les combinaisons techniques possibles :
- La portion de maintien et la portion principale sont venues de matière.
- La portion de maintien comporte des moyens d'encliquetage configurés pour bloquer la portion de maintien en position rapprochée.
- La portion principale comporte un ajour adapté pour entourer l'équipement.
- La portion principale et la portion de maintien sont reliées par un film charnière.
- Le pare-chocs est un pare-chocs arrière.
- Le dispositif lumineux est un feu arrière.

L'invention a également pour objet un véhicule, notamment un véhicule automobile. Le véhicule comprend un dispositif lumineux, une pièce de fixation du dispositif lumineux et un pare-chocs. Le véhicule est remarquable en ce que ledit pare-chocs est conforme au pare-chocs de véhicule selon la présente invention. Le dispositif lumineux est fixé au pare-chocs par fixation de la pièce de fixation dans l'ouverture de fixation.

Selon un mode particulier, la pièce de fixation présente une tête avec un diamètre DT et la portion de maintien présente un canal d'accès placé en regard de la tête lorsque la portion de maintien est en position rapprochée de l'ouverture de fixation, le canal d'accès présentant un diamètre interne DA inférieur au diamètre DT.

Selon un mode particulier, le véhicule comprend une carrosserie avec une trappe d'accès à la pièce de fixation.

Le montage d'un dispositif lumineux sur un pare-chocs nécessite une interface de fixation complexe. L'invention permet de rationnaliser et d'optimiser le partage des formes complexes entre le dispositif lumineux et le pare-chocs ; ce qui simplifie la réalisation de l'ensemble. L'invention permet en outre de réduire le coût de développement d'un véhicule automobile en supprimant la nécessité de fabriquer une pièce de sécurité supplémentaire, indépendante du pare-chocs.

Par ailleurs, le pare-chocs de la présente invention permet de sécuriser une pièce de fixation nécessaire à la fixation d'un équipement, notamment d'un dispositif lumineux. Cela optimise le démontage de ce type d'équipement car cette pièce de fixation n'est pas perdue au sein du pare-chocs du véhicule. Un autre avantage est de faciliter le remontage de ce type d'équipement, parce que le canal d'accès de la pièce de fixation permet le guidage de l'outil de fixation et est placé en vis-à-vis de l'ouverture de fixation prévue pour recevoir cette pièce de fixation.

D'autres caractéristiques et avantages de la présente invention seront mieux compris à l'aide de la description donnée à titre d'exemple et en référence aux dessins parmi lesquels :
La figure 1 présente une partie de pare-chocs de véhicule selon la présente invention.
La figure 2 est un agrandissement de la portion de maintien installée sur le pare-chocs du véhicule selon la présente invention.

Dans la description qui va suivre, la direction longitudinale correspond à la direction principale de déplacement du véhicule, et le sens avant à son sens principal de déplacement. La direction transversale est perpendiculaire à la direction longitudinale. Les orientations évoquées ci-après renvoient au sens normal de montage dans le véhicule.

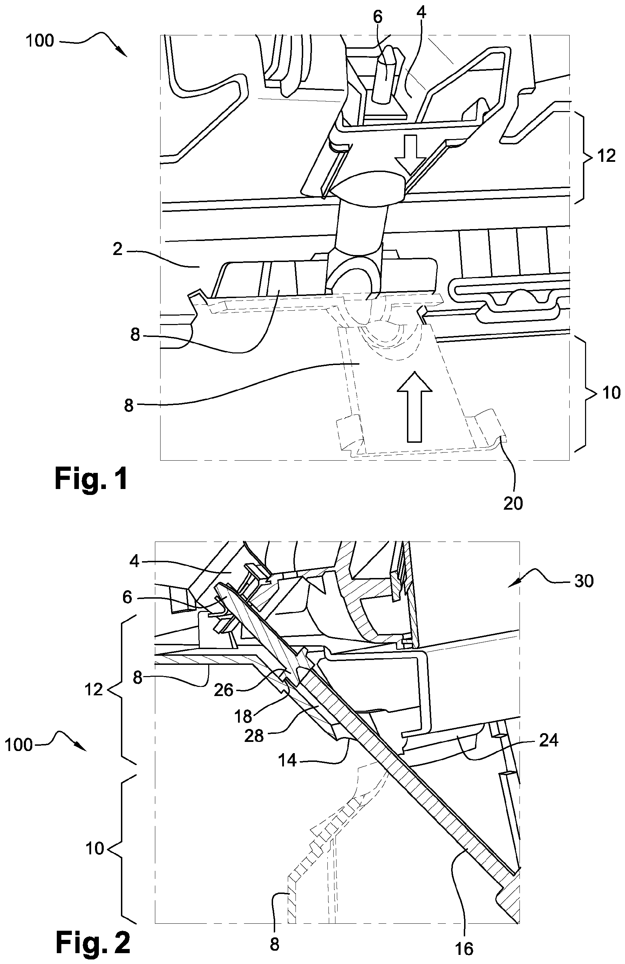

La figure 1 illustre une partie de pare-chocs 100 d'un véhicule automobile selon la présente invention. Le pare-chocs 100 est observé depuis l'intérieur du véhicule et comporte une portion principale 2 qui est destinée à être fixée à la structure du véhicule selon les moyens techniques couramment utilisés. Une ouverture de fixation 4 est représentée et permet de recevoir une pièce de fixation 6 pour un équipement de véhicule placé dans un ajour adapté à recevoir ledit équipement. L'ajour s'étend ainsi principalement selon la direction transversale du véhicule. L'ouverture de fixation 4 est généralement présente dans l'ajour, de préférence dans la moitié inférieure dudit ajour.

Un exemple d'équipement de véhicule est un dispositif lumineux, tel un phare. L'invention est particulièrement utile pour le montage d'un feu arrière auxiliaire dans un pare-chocs, ce qui est nécessaire lorsque les feux arrière principaux sont implantés dans le volet de coffre du véhicule. Il est en effet obligatoire de maintenir l'éclairage sur un véhicule automobile même lorsque le coffre est en position ouverte, et ses feux arrière principaux tournés vers le haut. Il est néanmoins compris que l'équipement ou le dispositif lumineux peut être inséré au niveau de la carrosserie et être fixé au moyen de la structure particulière du pare-chocs conformément selon la présente invention.

Le pare-chocs 100 est muni d'une portion de maintien 8 qui peut pivoter par rapport à la portion principale 2 entre au moins deux positions 10 et 12. Ces positions peuvent éventuellement être diamétralement opposées. Les positions 10 et 12 de la figure 1 représentent respectivement une position éloignée 10 de l'ouverture de fixation 4 (position 10 représentée en trait pointillé) et une position rapprochée 12 de l'ouverture de fixation 4 (position 12 représentée en trait plein). La position éloignée 10 est aussi une position de la portion de maintien 8 qui est située à distance de l'ouverture de fixation. Cette position éloignée 10 peut ainsi être également dite ouverte. Par contre, la position rapprochée 12 correspond à la position où la portion de maintien 8 est suffisamment rapprochée pour maintenir la pièce de fixation 6 dans l'ouverture de fixation 4. On peut alors parler d'une position fermée.

La portion de maintien 8 a pour but de maintenir la pièce de fixation 6 en vis-à-vis de l'ouverture de fixation 4. En option, elle permet le guidage d'un outil de fixation 16 permettant d'agir sur la pièce de fixation 6.

La portion de maintien 8 peut être une pièce indépendante de la portion principale 2 du pare-chocs. Cependant, afin de réduire les coûts, notamment en terme de moulage et/ou de gestion de stocks, il est entendu que la portion de maintien 8 et la portion principale 2 sont venues de matières. Cette façon de produire la pièce de maintien 8 est avantageuse car elle élimine la production relativement coûteuse d'un moule et évite de devoir monter une pièce indépendante sur le pare-chocs. Puisque la portion de maintien 8 est pivotante, le pare-chocs 100 peut être produit dans une configuration de la portion de maintien 8 simplifiant son démoulage. Dès lors la géométrie de cette dernière peut être optimisée en fonction de l'effet procuré. Le caractère mobile de la portion de maintien 8 offre donc un double intérêt.

Lors du montage d'un dispositif lumineux dans le pare-chocs, une pièce de fixation 6, par exemple une vis, est pré-montée dans l'ajour prévu pour entourer le dispositif lumineux. Dans le cas de l'utilisation d'une vis, l'ajour est muni d'une agrafe fileté ou d'un écrou qui permet le vissage de la vis. Le pré-montage consiste à fixer partiellement la vis dans l'ouverture de fixation 4. Après le pré-montage de la pièce de fixation 6, la portion de maintien 8 est pivotée dans la position rapprochée 12 de l'ouverture de fixation 4. Des moyens de fermeture, par exemple des moyens d'encliquetage 20, peuvent être présents sur la portion de maintien 8 afin de bloquer la portion de maintien 8 en position rapprochée. Les moyens d'encliquetage 20 ne sont normalement pas prévu pour permettre le pivotement de la position de maintien 8 de la position rapprochée 12 à la position éloignée 10. Néanmoins, le manufacturier automobile peut prévoir des moyens d'encliquetage 20 permettant d'effectuer le pivotement dans ce sens particulier.

La figure 2 montre un agrandissement de la portion de maintien 8 en position éloignée 10 (en trait pointillé) et en position rapprochée 12 (en trait continu). Le dispositif lumineux 30 (partiellement représenté) est monté au contact du pare-chocs 100.

Un passage de guidage 14 permettant d'introduire un outil de fixation 16 dans le canal d'accès 28 de la pièce de fixation 6 est prévu dans la portion de maintien 8. L'outil de fixation 16 peut par exemple être un tournevis. La portion de maintien 8 peut également comprendre une surface de butée 18 qui est adaptée pour bloquer la pièce de fixation 6 lorsqu'elle occupe sa position fermée 12. La surface de butée 18 peut être perpendiculaire à la pièce de fixation 6 dans la position rapprochée 12. Elle peut former un disque, ou un secteur angulaire de disque.

Le pivotement de la portion de maintien 8 autour de la portion principale 2 est assuré par un film charnière 24 qui s'étend transversalement le long du pare-chocs. Ce film charnière 24 peut s'étendre sur toute la largeur de la portion de maintien 8.

Afin que la pièce de fixation 6 reste bloquée hors du canal d'accès 28 de la portion de maintien 8, il faut que la tête 26 de ladite pièce de fixation 6 ait un diamètre DT supérieur au diamètre interne DA dudit canal d'accès 28. De manière facultative, le rapport DT/DA est ainsi supérieur à 1,00 ; ou à 1,10, ou à 1,15.

Après le pré-montage de la vis (par exemple, au moyen d'un quart de tour de tournevis) et après le pivotement de la portion de maintien 8 dans la position fermée 12, le dispositif lumineux 30 est inséré dans l'ajour prévu pour entourer cet équipement de véhicule. L'ajour peut soit être présent dans la portion principale 2 du pare-chocs (dans ce cas, le dispositif lumineux 30 sera inséré au niveau du pare-chocs du véhicule), soit être présent à un autre endroit du véhicule, notamment au niveau de la carrosserie. Une fois le dispositif lumineux 30 inséré dans l'ajour prévu, l'utilisateur doit serrer complètement la vis au moyen de l'outil de fixation 16. En fin de montage, une trappe vient bloquer l'accès à la pièce de fixation 6. Cette trappe d'accès peut simplement avoir un caractère esthétique et/ou présenter des fonctionnalités utiles pour le véhicule, telles qu'un accès pour un anneau de remorquage. Elle permet également de faire barrière aux salissures.

Lorsqu'une maintenance doit être effectuée sur l'équipement, par exemple lorsque l'ampoule du phare doit être remplacée, l'utilisateur doit démonter au moins partiellement ledit équipement. La trappe d'accès est tout d'abord retirée. Ensuite, au moyen d'un outil, identique à l'outil de fixation 16, la pièce de fixation 6 est desserrée, ce qui permet de libérer l'équipement, puis de le désincarcérer de son ajour. La portion de maintien 8 qui comporte une surface de butée 18 permet d'empêcher la perte de la pièce de fixation 6 lors du démontage. La pièce de fixation 6, partiellement relâchée de l'ouverture de fixation 4, reste en effet coincée dans le canal d'accès grâce à la surface de butée 18. Les travaux de maintenance sur l'équipement peuvent être effectués et ensuite l'équipement est réinséré dans son ajour, la pièce de fixation 6 resserrée au moyen de l'outil de fixation 16 et la trappe d'accès replacée afin de protéger l'accès à la pièce de fixation 6.

## Revendications

1. Pare-chocs (100) de véhicule avec une structure, le pare-chocs (100) comprenant :
- une portion principale (2) destinée à être fixée à la structure du véhicule ; et
- une ouverture de fixation (4) destinée à recevoir une pièce de fixation (6) pour un équipement du véhicule, notamment un dispositif lumineux (30) ;
comprenant en outre
une portion de maintien (8) pivotant par rapport à la portion principale (2) ;
la portion de maintien (8) pivotant entre une position éloignée (10) de l'ouverture de fixation (4) et une position rapprochée (12) de l'ouverture de fixation (4) afin d'y maintenir la pièce de fixation (6),
la portion de maintien (8) comportant un passage de guidage (14) pour un outil de fixation (16) de la pièce de fixation (6).
**caractérisé en ce que** la portion de maintien (8) comprend une surface de butée (18) adaptée pour bloquer la pièce de fixation (6) en position rapprochée (12).

2. Pare-chocs (100) selon la revendication 1, **caractérisé en ce que** la portion de maintien (8) et la portion principale (2) sont venues de matière.

3. Pare-chocs (100) selon l'une quelconque des revendications 1 à 2, **caractérisé en ce que** la portion de maintien (8) comporte des moyens d'encliquetage (20) configurés pour bloquer la portion de maintien (8) en position rapprochée (12).

4. Pare-chocs (100) selon l'une quelconque des revendications 1 à 3, **caractérisé en ce que** la portion principale (2) comporte un ajour adapté pour entourer l'équipement.

5. Pare-chocs (100) selon l'une quelconque des revendications 1 à 4, **caractérisé en ce que** la portion principale (2) et la portion de maintien (8) sont reliées par un film charnière (24).

6. Véhicule, notamment automobile, le véhicule comprenant un dispositif lumineux (30), une pièce de fixation (6) du dispositif lumineux (30) et un pare-chocs (100), **caractérisé en ce que** ledit pare-chocs (100) est conforme à l'une des revendications 1 à 5, le dispositif lumineux (30) étant fixé au pare-chocs (100) par fixation de la pièce de fixation (6) dans l'ouverture de fixation.

7. Véhicule selon la revendication 6, **caractérisé en ce que** la pièce de fixation (6) présente une tête (26) avec un diamètre DT, la portion de maintien (8) présentant un canal d'accès (28) placé en regard de la tête (26) lorsque la portion de maintien (8) est en position rapprochée (12) de l'ouverture de fixation (4), le canal d'accès (28) présentant un diamètre interne DA inférieur au diamètre DT.

8. Véhicule selon l'une quelconque des revendications 6 à 7, **caractérisé en ce qu'**il comprend une carrosserie avec une trappe d'accès à la pièce de fixation (6).

## Patentansprüche

1. Stoßstange (100) eines Fahrzeugs mit einer Struktur, wobei die Stoßstange (100) eine Struktur aufweist:
- einen Hauptteil (2), der an der Fahrzeugstruktur befestigt werden soll; und
- eine Befestigungsöffnung (4) zur Aufnahme eines Befestigungsteils (6) für eine Fahrzeugausrüstung, insbesondere eine Beleuchtungseinrichtung (30), die ferner einen Halteabschnitt (8) aufweist, der relativ zum Hauptteil (2) verschwenkbar ist; Der Halteabschnitt (8), der zwischen einer Fernstellung (10) der Befestigungsöffnung (4) und einer Nahstellung (12) der Befestigungsöffnung (4) verschwenkbar ist, um das Befestigungsstück (6) darin zu halten, wobei der Halteabschnitt (8) einen Führungsdurchgang (14) für ein Befestigungswerkzeug (16) des Befestigungsstücks (6) aufweist. Halteabschnitt (8) umfasst eine Anschlagfläche (18), die zum Arretieren des Befestigungsstückes (6) in der Nahposition (12) ausgebildet ist.

2. Stoßstange (100) nach Anspruch 1, **dadurch gekennzeichnet, dass** der Halteabschnitt (8) und der Hauptabschnitt (2) aus Material bestehen.

3. Stoßstange (100) nach einem der Ansprüche 1 bis 2, **dadurch gekennzeichnet, dass** der Halteabschnitt (8) Rastmittel (20) aufweist, die so ausgebildet sind, dass sie den Halteabschnitt (8) in der Nahposition (12) arretieren.

4. Stoßstange (100) nach einem der Ansprüche 1 bis 3, **dadurch gekennzeichnet, dass** der Hauptabschnitt (2) einen Durchbruch aufweist, der geeignet ist, die Ausrüstung zu umgeben.

5. Stoßstange (100) nach einem der Ansprüche 1 bis 4, **dadurch gekennzeichnet, dass** der Hauptabschnitt (2) und der Halteabschnitt (8) durch eine Scharnierfolie (24) verbunden sind.

6. Fahrzeug, insbesondere Kraftfahrzeug, wobei das Fahrzeug eine Lichtvorrichtung (30), ein Befestigungsteil (6) der Lichtvorrichtung (30) und einen Stoßfänger (100) umfasst, **dadurch gekennzeichnet, dass** der Stoßfänger (100) einem der Ansprüche 1 bis 5 entspricht, wobei die Lichtvorrichtung (30) an dem Stoßfänger (100) durch Befestigung des Teils befestigt ist Befestigung (6) in der Befestigungsöffnung.

7. Fahrzeug nach Anspruch 6, **dadurch gekennzeichnet, dass** das Befestigungsteil (6) einen Kopf (26) mit einem Durchmesser DT aufweist, wobei der Halteabschnitt (8) einen Zugangskanal (28) aufweist, der dem Kopf (26) gegenüberliegt, wenn sich der Halteabschnitt (8) in der Nahposition (12) der Befestigungsöffnung (4) befindet, wobei der Zugangskanal (28) mit einem Innendurchmesser DA kleiner als der DT-Durchmesser.

8. Fahrzeug nach einem der Ansprüche 6 bis 7, **dadurch gekennzeichnet, dass** es eine Karosserie mit einer Zugangsklappe zum Befestigungsteil (6) umfasst.

## Claims

1. Bumper (100) of vehicle with structure, bumper (100) including
- a main portion (2) intended to be attached to the vehicle structure;
and
- a fastening opening (4) intended to receive a fastening part (6) for a vehicle equipment, including a light device (30), which also includes a holding portion (8) swivel in relation to the main part (2); the holding portion (8) rotating between a position away (10) from the attachment opening (4) and a position close (12) to the attachment opening (4) in order to maintain the attachment part (6), the holding portion (8) having a guide passage (14) for a fastening tool (16) of the attachment part (6). The holding portion (8) includes a stop surface (18) suitable for blocking the attachment part (6) in the close position (12).

2. Bumper (100) according to Claim 1, characterized as the portion of maintenance (8) and the main portion (2) came from material.

3. Bumper (100) according to any of claims 1 to 2, **characterized by** the fact that the portion of the hold (8) has means of locking (20) configured to block the portion of hold (8) in close position (12).

4. Bumper (100) according to any claim 1 to 3, **characterized by** the fact that the main portion (2) has an appropriate day to surround the equipment.

5. Bumper (100) according to any claim 1 to 4, characterized as the main portion (2) and the maintenance portion (8) are connected by a hinge film (24)

6. Vehicle, in particular automobile, means a vehicle consisting of a luminous device (30), a fastening part (6) of the luminous device (30) and a bumper (100), **characterized by** that bumper (100) conforming to one of the claims 1 to 5, with the light device (30) attached to the bumper (100) by the attachment of the part attachment (6) in the attachment opening.

7. Vehicle according to claim 6, characterized as the attachment part (6) has a head (26) with a diameter DT, the holding portion (8) with an access channel (28) placed next to the head (26) when the holding portion (8) is in the close position (12) of the securing opening (4), the access channel (28) having an internal diameter DA less than the diameter DT.

8. Vehicle according to any of the claims 6 to 7, **characterized in that** it includes a bodywork with an access door to the attachment part (6).
